# EUROPÄISCHE PATENTANMELDUNG

(11) **EP 1 696 146 A1**
(43) Veröffentlichungstag der Anmeldung: **30.08.2006**
(21) Anmeldenummer: 06003556.5
(22) Anmeldetag: 22.02.2006
(51) Int. Cl.: F16D 23/06

(54) **Gangwechselkupplung**

(30) Priorität: 24.02.2005 DE 102005008441
(71) Anmelder: DaimlerChrysler AG, 70567 Stuttgart (DE)
(72) Erfinder: Kraft, Josef, 76571 Gaggenau (DE)

(57) **Zusammenfassung**

Die Erfindung betrifft eine Gangwechselkupplung. Die Schaltnut (3) ist dabei in einem Kunststoffkörper (5) angeordnet. Die schaltklauen (7) sind an einem Sintermetallring (6) angeordnet.

## Beschreibung

Die Erfindung betrifft eine Gangwechselkupplung gemäß dem Oberbegriff von Patentanspruch 1.

Aus der DE 199 12 131 **A1** ist bereits eine solche Gangwechselkupplung bekannt. Diese Gangwechselkupplung gemäß Fig. 1 der besagten Druckschrift weist einen Muffenkörper aus Kunststoff auf, der mit einer umfangsmäßigen Schaltnut versehen ist. In den Muffenkörper sind Zähne aus Metall einzeln eingebettet.

Ferner sind aus den Fig. 5 bis Fig. 8 der besagten Druckschrift Gangwechselkupplungen aus einem Kunststoff-Metall-Verbund bekannt, bei denen die Verzahnung aus einem verzahnt profiliertem Blechstreifen besteht.

Aus der DE 101 38 358 A1 ist es hingegen bekannt, den Muffenträger als Kunststoff-Metall-Verbundteil herzustellen.

Aufgabe der Erfindung ist es, eine kostengünstige Gangwechselkupplung zu schaffen.

Diese Aufgabe wird erfindungsgemäß mit den Merkmalen von Patentanspruch 1 gelöst.

Dabei trägt ein Innenring aus Sintermetall die Schaltklauen.

Bei der Formgebung mit Kunststoff und Sintermetall fällt in vorteilhafter Weise kaum Abfallmaterial an.

Es kann dabei gemäß einer Ausgestaltung vorgesehen sein, die Hinterlegung der Schaltklauen spanend zu fertigen. D.h. die Hinterlegung der Schaltklauen wird aus dem Sintermetall herausgefräst oder herausgeschliffen.

Die Schaltgabelführung ist dabei an einem Kunststoffkörper angeordnet, der in besonders vorteilhafter Weise in einem Spritzgusswerkzeug auf den Innenring am Außenumfang aufgespritzt ist. Dies ermöglicht eine kostengünstige Fertigung. Indem ein Verbindungsteil zur Herstellung eines Formschlusses mit dem aufgespritzten Kunststoffkörper als radial nach außen vorstehende Ausformung ausgeführt ist, wird das Bauteil im Bereich der Schaltklauen nicht konstruktiv geschwächt. Hohe Schaltkräfte in Axialrichtung können jedoch übertragen werden.

Als Schaltgabel im Sinne dieser Anmeldung soll auch eine Schaltschwinge gelten. Diese Schaltgabel kann beispielsweise aus Stahl oder aus Aluminium gefertigt sein. Insbesondere kann die Schaltgabel auch aus Blech gefertigt sein. Die Werkstoffkombination einer Schaltgabel aus Metall und der Schaltgabelführung aus Kunststoff ermöglich es in besonders vorteilhafter Weise, die Schaltgabel über einen großen Winkel von über 50° - insbesondere 180° - vollflächig an der Schaltgabelführung anzuliegen. Das ist bei üblichen Schaltgabeln nicht möglich, da diese über Schaltschuhe - sogenannte Patten - aus Kunststoff verfügen, die an den Gabelenden der Schaltgabeln angeordnet sind und in die Schaltnuten der Schaltmuffen eingreifen. Die Schaltnut mit Wandungen aus Kunststoff und die Schaltgabel aus Metall, wie Stahl oder Aluminium bilden dabei eine ideale Gleitpaarung. Dies ermöglicht in besonders kostengünstiger Weise, unbeschichtetes Metall für die korrespondierenden Gleitbereiche an den Schaltgabeln zu verwenden.

Allgemein gilt, dass die Sicherheit gegen ein Verkippen der Schaltmuffe umso höher ist, je näher der besagte Winkel bei 180° liegt.

In besonders vorteilhafter Weise kann die Schaltgabelführung eine außenseitig im Kunststoff umlaufende Schaltnut sein, in welche die Schaltgabel eingreift. Jedoch sind erfindungsgemäß auch beliebige andere Schaltgabelführungen möglich, wie eine solche beispielsweise in Fig. 6 der eingangs genannten DE 199 12 131 A1 gezeigt ist.

In besonders vorteilhafter Weise kann der um den Innenring gespritzte Kunststoffkörper armiert sein. Das umfasst nicht nur Faserverstärkungen. Es kann auch ein Blech eingelegt sein, welches im Profil eine U-Form aufweist, die mit der als Schaltnut ausgeführten Schaltgabelführung korrespondiert. Damit können hohe Schaltkräfte und gegebenenfalls auch Missbrauchskräfte übertragen werden, ohne dass die Schaltmuffe bricht. Solche Missbrauchskräfte treten beispielsweise bei manuell schaltbaren Vorgelegegetrieben auf, wenn der Fahrer den Schalthebel im Stillstand des Getriebes übersteigt und mit dem Bein am Schalthebel hängen bleibt.

Der Innenring aus Sintermetall kann in besonders vorteilhafter Weise in Warmpresstechnik hergestellt sein. Bei dem Warmpressen wird das Sintermetallpulver erwärmt, bevor es zum Pressen in das Werkzeug eingefüllt wird. Dabei wird eine Dichte größer als 7,1 kg/dm³ erreicht. In Verbindung mit der Erfindung hat sich eine Dichte größer als 7,3 kg/dm³ als besonders vorteilhaft erwiesen. Diese hohen Werkstückdichten ermöglichen es in besonders vorteilhafter Weise, die Oberfläche des Innenringes in einer Gasatmosphäre einer Einsatzhärtung zu unterziehen, ohne dass das Gas zu tief in das Innere des prinzipbedingt porösen Sintermetalls dringt. Damit ist in besonders vorteilhafter Weise nur die Randschicht hart und verschleißfest, wohingegen der Innenring selbst zäh ist. Somit kann es bei den schlagartigen Belastungen, denen die Schaltklauen ausgesetzt sind, nicht zum Sprödbruch des Innenringes kommen. Eine mögliche Oberflächenhärtung mit Gas ist das Aufkohlen.

Weitere Vorteile der Erfindung gehen aus den weiteren Patentansprüchen, der Beschreibung und der Zeichnung vor.

Die Erfindung ist nachfolgend anhand mehrerer Ausführungsbeispiele in der Zeichnung erläutert.

Dabei zeigen:
- Fig. 1: in einer Explosionsdarstellung eine Schaltmuffe und die zugehörige Schaltgabel,
- Fig. 2: eine erste Ausführungsform der Schaltmuffe gemäß Fig. 1,
- Fig. 3: eine zweite Ausführungsform der Schaltmuffe gemäß Fig. 1 und
- Fig. 4: eine dritte Ausführungsform der Schaltmuffe gemäß Fig. 1.

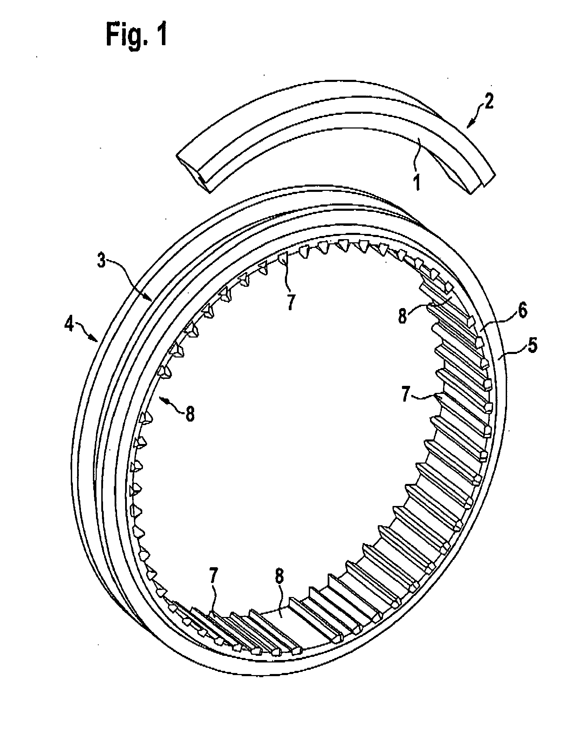

Fig. 1 zeigt eine Schaltmuffe einer Gangwechselkupplung. An drei Unterbrechungen 8 der Schaltmuffe ist ersichtlich, dass die Gangwechselkupplung einer Synchronisiereinrichtung zugehörig ist. Eine solche Synchronisiereinrichtung ist beispielsweise eine Sperrsynchronisiereinrichtung nach dem System Borg-Warner. Die Erfindung kann jedoch in gleicher Weise bei Gangwechselkupplungen Anwendung finden, die als reine Formschlusskupplung ohne Synchronringe ausgeführt sind.

Im nicht dargestellten montierten Zustand greift ein Führungsring 1 einer Schaltgabel 2 in eine Schaltnut 3 der Schaltmuffe 4. Die Schaltmuffe 4 umfasst dabei einen Kunststoffkörper 5 und einen Innenring 6, auf dessen Innenseite die Schaltklauen 7 einteilig angeordnet sind. Der Innenring 6 mitsamt den Schaltklauen 7 besteht aus einem warmgepressten Sintermetall, dessen Oberfläche einsatzgehärtet bzw. mit Gas aufgekohlt ist. Dabei hat das Sintermetall eine Dichte größer als 7,3 kg/dm³.

Die Schaltgabel 2 greift im montierten Zustand über einen Winkel von ca. 80° vollflächig in die Schaltnut 3. In einer nicht dargestellten alternativen Ausgestaltung greift die Schaltgabel über einen Winkel von 180° vollflächig in die Schaltnut.

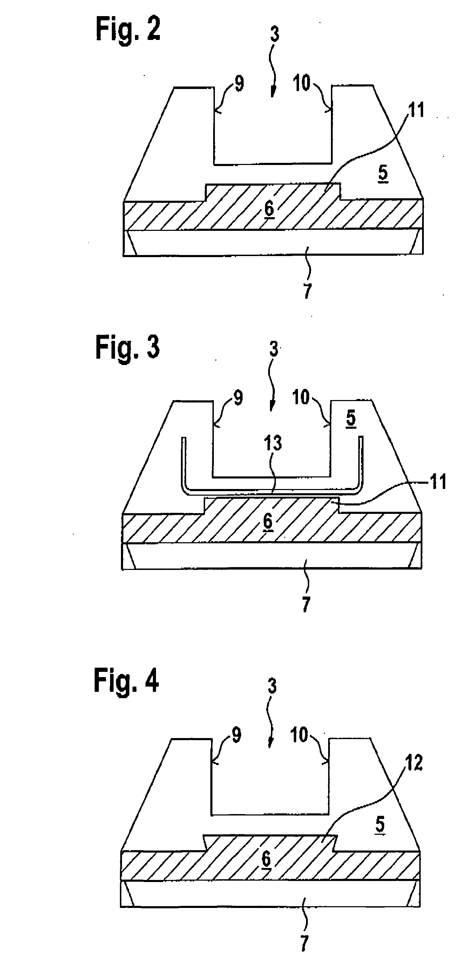

In den Fig. 2 bis Fig. 4 ist dabei ersichtlich, dass der Führungsring 1 der Schaltgabel 2 mit dessen beiden axial in die entgegengesetzte Richtung weisenden Axialanlageflächen an den beiden Schaltnutwandungen 9, 10 anlegbar ist.

Gemäß den drei Ausführungsbeispielen weist der Innenring 6 am Außenumfang eine von dem Kunststoff umspritzte Ausformung 11 bzw. 12 auf. Diese Ausformungen 11 bzw. 12 sind einstückig ohne axiale Hinterschnitte im Sinterprozeß des Innenringes 6 eingepresst, so dass der Innenring 6 problemlos mit einem Sinterpresswerkzeug hergestellt werden kann.

Die Ausformungen 11 bzw. 12 sind jeweils als axial mittiger Absatz ausgeführt. In den ersten beiden Ausführungsformen Fig. 2 und Fig. 3 weist der Absatz keinen radialen Hinterschnitt auf. In der dritten Ausführungsform Fig. 4 ist der Absatz hingegen als umlaufender Schwalbenschwanz ausgeführt.

Im zweiten Ausführungsbeispiel Fig. 3 ist bereits beim Umspritzen des Innenringes mit Kunststoff ein umlaufender Blechring 13 in den Kunststoffkörper 5 eingebettet worden. Dieser Blechring 13 weist ein radial nach außen öffnendes U-förmiges Profil auf, das im wesentlichen die Form der Schaltnut 3 nachbildet. Damit wird eine besonders hohe Stabilität des Kunststoffkörpers 5 gegen hohe Schaltkräfte erreicht. Ein solcher Blechring kann auch bei der dritten Ausführungsform Fig. 4 Anwendung finden.

Im Getriebe überträgt die Schaltmuffe im eingerückten Zustand ein Drehmoment, dass über die Schaltklauen 7 verläuft. Um den eingerückten Zustand während der Drehmomentübertragung sicher zu halten, weisen die Schaltklauen 7 in üblicher Weise eine in der Zeichnung nicht näher ersichtliche Hinterlegung auf. Eine solche Hinterlegung kann beispielsweise der Fig. 2 bis Fig. 4 der DE 103 16 947 B3 entnommen werden. Diese Hinterlegung der Schaltklauen ist dabei spanend gefertigt.

Der Kunststoff des Kunststoffkörpers 5 kann sowohl ein Thermoplast als auch ein Duroplast sein. Der Kunststoff kann auch andere Armierungen, als den in Fig. 3 dargestellten Blechring 13, aufweisen. So können auch einzelne nicht umlaufende Einlegeteile oder eine Faserverstärkung vorgesehen sein.

Anstelle der radial ausladenden Ausformungen können auch Einformungen zur Verbindung zwischen dem Innenring und dem Kunststoffkörper vorgesehen sein. Diese Ausformungen oder Einformungen müssen nicht umlaufend sein, sondern können auch unterbrochen sein.

In einer weiteren Ausgestaltung der Erfindung ist der Innenring nicht umspritzt. Stattdessen sind der Innenring aus Sintermetall und der Kunststoffkörper mit der Schaltgabelführung separat hergestellt und mittels einer Formschlussverbindung oder Reibschlussverbindung gekoppelt. Ebenso können diese beiden Teile miteinander verklebt sein. Auch ist es möglich, eine Formschlussverbindung oder Reibschlussverbindung zusätzlich zu kleben. Da bei Sinter-und Kunststoffteilen eine sehr komplexe Formgebung möglich ist, kann beispielsweise ein Bajonettverschluss vorgesehen sein, der zusätzlich verklebt ist. Ein solcher beispielsweise von Kameraobjektiven bekannter Bajonettverschluss Stellt eine axial montierbare Verbindung dar, die nach dem Verdrehen eine axiale Unverschieblichkeit der Bauteile zueinander gewährleistet.

Neben der Einsatzhärtung mit Gas sind auch andere Verfahren zur Einsatzhärtung denkbar.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

## Patentansprüche

1. Gangwechselkupplung mit einer Schaltgabelführung (3) aus Kunststoff und Schaltklauen (7) aus Metall,
**dadurch gekennzeichnet,**
**dass** die Schaltklauen (7) an einem Innenring (6) aus Sintermetall angeordnet sind.

2. Gangwechselkupplung nach Patentanspruch 1,
**dadurch gekennzeichnet,**
**dass** der Innenring (6) am Außenumfang ein von dem Kunststoff umspritztes Verbindungsteil aufweist.

3. Gangwechselkupplung nach Patentanspruch 2,
**dadurch gekennzeichnet,**
**dass** das Verbindungsteil eine einteilig mit dem Innenring (6) aus Sintermetall gefertigte Ausformung (11 bzw. 12) ist.

4. Gangwechselkupplung nach Patentanspruch 3,
**dadurch gekennzeichnet,**
**dass** die Ausformung (11 bzw. 12) ein außenseitig umlaufender Ring ist.

5. Gangwechselkupplung nach einem der vorhergehenden Patentansprüche,
**dadurch gekennzeichnet,**
**dass** die Schaltgabelführung (3) eine außenseitig im Kunststoff umlaufende Schaltnut ist, in welche eine Schaltgabel eingreift.

6. Gangwechselkupplung nach einem der vorhergehenden Patentansprüche,
**dadurch gekennzeichnet,**
**dass** in den Kunststoff eine Armierung (13) eingelegt ist.

7. Gangwechselkupplung nach Patentanspruch 6,
**dadurch gekennzeichnet,**
**dass** die Armierung ein Blechteil ist, welches im Profil eine U-Form aufweist, die mit der als Schaltnut ausgeführten Schaltgabelführung (3) korrespondiert.

8. Gangwechselkupplung nach einem der vorhergehenden Patentansprüche,
**dadurch gekennzeichnet,**
**dass** der Innenring (6) aus Sintermetall in Warmpresstechnik hergestellt ist.

9. Gangwechselkupplung nach Patentanspruch 8,
**dadurch gekennzeichnet,**
**dass** der Innenring (6) mit Gas aufgekohlt ist.

10. Gangwechselkupplung nach einem der vorhergehenden Patentansprüche,
**dadurch gekennzeichnet,**
**dass** eine Hinterlegung der Schaltklauen (7) spanend gefertigt ist.

11. Gangwechselkupplung nach einem der vorhergehenden Patentansprüche,
**dadurch gekennzeichnet,**
**dass** eine Schaltgabel (2) an der Schaltgabelführung (3) einen Gesamtanlagewinkel von zumindest 50° aufweist.
